# EUROPEAN PATENT SPECIFICATION

(11) **EP 2 945 098 B1**
(45) Date of publication and mention of the grant of the patent: **07.11.2018**
(21) Application number: 15167609.5
(22) Date of filing: 13.05.2015
(51) Int. Cl.: G06K 9/00, G06K 9/72

(54) **METHOD AND DEVICE FOR HIDING PRIVACY INFORMATION**
VERFAHREN UND VORRICHTUNG ZUM VERBERGEN VON PRIVATSPHÄRENINFORMATIONEN
PROCÉDÉ ET DISPOSITIF PERMETTANT DE MASQUER DES INFORMATIONS DE CONFIDENTIALITÉ

(30) Priority: 13.05.2014 CN 201410200812
(43) Date of publication of application: 18.11.2015
(73) Proprietor: Xiaomi Inc., Beijing 100085 (CN)
(72) Inventor: Zhang, Bo, 100085 BEIJING (CN); Liu, Xinyu, 100085 BEIJING (CN); Chen, Zhijun, 100085 BEIJING (CN)
(74) Representative: Delumeau, François Guy

(56) References cited:
- WO-A1-2013/100980
- US-A1- 2004 091 177
- US-A1- 2008 180 538
- US-A1- 2012 128 251
- US-A1- 2012 169 762
- US-A1- 2013 162 817
- US-B1- 8 345 921

## Description

### TECHNICAL FIELD

The present disclosure relates to the field of image processing, and more particularly, to a method and a device for hiding privacy information.

### BACKGROUND

On mobile terminals such as smartphones, tablet computers, e-book readers and hand-held devices, the application of photo-sharing type is one of the most widely used applications in people's daily life.

The pictures spread in these applications often carry with privacy information, such as license plate numbers, mobile phone numbers, instant messaging account names and human faces. The related technology provides a method for hiding privacy information in a picture, including: recognizing the character information in the picture by OCR (Optical Character Recognition) technology; performing fuzzification processing to the region of the picture containing the character information; using the picture in which the character information has been fuzzed to spread in the application.

US patent US345921B1 describes a system for detecting objects in an image. The system includes an object detector module configured to detect regions of the photographic image that include objects of a particular type at least based on the content of the photographic image. The system further includes a false positive detector module configured to determine whether each region detected by the object detector module includes an object of the particular type at least based on information about the context in which the photographic image was taken.

US patent application US2004/091177A1 describes a method of limiting visual information that can be stored or transmitted captures a visual image. The method further includes comparing symbols generated by the optical symbol recognition routine to one or more predetermined symbols. When a symbol match to one or more predetermined symbols is generated, at least a portion of the visual image is obscured.

PCT application WO2013/100980A1 describes technology for preventing classification of objects, e.g., in an augmented reality system. The technology can identify a set of objects to be classified, determine whether context information for one or more objects in the identified set of objects to be classified is identified as not to be employed during classification, and during classification of two different objects, include context information for one object but not the other.

US patent application US2008/180538A1 describes a system that includes an imaging device operable to acquire an image of a subject. The system also includes an anonymizer circuit operable to generate an anonymized image that includes a decreased fidelity of a property of a subject of the acquired image in response to an anonymization policy. The system further includes a display operable to provide a human-perceivable indication of the anonymization policy.

In the process of realizing the present disclosure, the inventor found that the related technology at least had the following problems: the above method performs fuzzification processing to all the characters in a picture, which is more suitable for hiding privacy information in nature pictures. At present, however, in many pictures, not all character information needed to be hidden, such as character information in screenshots or webpage screenshots; the above method cannot satisfactorily deal with privacy information in this kind of pictures.

### SUMMARY

To solve the problem that the prior art cannot satisfactorily perform privacy information processing to a picture in which not all the character information is privacy information needed to be hidden, the embodiments of the present disclosure provide a method and a device for hiding privacy information. The technical solutions are as follows.

A method for hiding privacy information is provided according to the first aspect of the present disclosure. The method comprises the steps recited in claim 1.

Thus, the method for hiding privacy information provided by the present embodiment allows to adopt different processing ways, with respect to different information categories of the privacy information, to perform privacy information hiding processing.

Optionally, the step of analyzing the information category of each piece of the privacy information comprises:
recognizing, if the privacy information is text information, the information category of the privacy information according to a preset regular expression, different regular expressions corresponding to different information categories; or, recognizing the information category of the privacy information according to semantic analysis of context; and
recognizing, if the privacy information is face information, the information category of the face information according to a preset face information database.

Thus, the information category of the privacy information is exactly recognized.

It is common that the smartphone users take screenshots and then share them to other people or SNS. But the screenshots may include the user's private information, the users must hide the private information by using image software before they share the screenshots, even they may need to download image software first. It is a too complex process for users.

The invention provides a method for solving the above problem. By using the method of the invention, when there is a screenshot (the picture which is gotten by printing the screen of the smartphone) in the system of the smartphone, the smartphone will recognize and hide the privacy information automatically. The users can share the screenshots immediately, they no longer need to hide the privacy information by themselves.

Optionally, the step of performing hiding processing to the privacy information in the picture according to the information category comprises:
detecting, for each piece of the privacy information, whether the information category of the privacy information is a category needed to be hidden; and
hiding the privacy information if it is detected that the information category is the category needed to be hidden.

Thus, the method for hiding privacy information provided by the present embodiment solves the problem that the related technology in the prior art cannot perform privacy information processing to the picture in which not all the character information is privacy information that needs to be hidden.

Optionally, the step of hiding the privacy information comprises:
determining a hiding range and/or a hiding mode for the privacy information according to the information category; and
hiding the privacy information according to the hiding range and/or the hiding mode.

The method for hiding privacy information provided by the above embodiment may enable personalized hiding processing according to user's settings, by configuring different ranges and modes of hiding for information categories of the privacy information, thus allowing to adopt different processing ranges and modes to perform privacy information hiding with respect to different information categories of the privacy information.

Optionally, the step of recognizing at least one piece of privacy information in a picture comprises:
acquiring, if the picture is a screenshot, application program information or display interface information corresponding to the screenshot;
analyzing a picture region, to which each piece of the privacy information in the picture belongs, according to the application program information or the display interface information; and
recognizing corresponding privacy information according to each picture region. Thus, the privacy information on the screenshot is exactly recognized.

A device for hiding privacy information is provided according to the second aspect of the present disclosure. The device comprises the components recited in claim 6.

Optionally, the category analyzing module comprises:
a text analyzing unit and a face analyzing unit;
the text analyzing unit is configured to recognize, when the privacy information is text information, the information category of the privacy information according to a preset regular expression, different regular expressions corresponding to different information categories; or, recognize the information category of the privacy information according to a semantic analysis of context; and
the face analyzing unit is configured to recognize, when the privacy information is face information, the information category of the face information according to a preset face information database.

Optionally, the hiding processing module comprises: a category detecting unit and an information hiding unit;
the category detecting unit is configured to detect, for each piece of the privacy information, whether the information category of the privacy information is a category needed to be hidden; and
the information hiding unit is configured to hide the privacy information when the category detecting unit detects that the information category is the category needed to be hidden.

Optionally, the information hiding unit comprises:
a hiding determining subunit and an information hiding subunit;
the hiding determining subunit is configured to determine a hiding range and/or a hiding mode of the privacy information according to the information category; and
the information hiding subunit is configured to hide the privacy information according to the hiding range and/or the hiding mode.

Optionally, the information recognizing module comprises: an information acquiring unit, a region determining unit and an information recognizing unit;
the information acquiring unit is configured to acquire, when the picture is a screenshot, application program information or display interface information corresponding to the screenshot;
the region determining unit is configured to analyze a picture region, to which each piece of the privacy information in the picture belongs, according to the application program information or the display interface information; and
the information recognizing unit is configured to recognize corresponding privacy information according to the picture region.

The advantages and features of the devices according to the embodiments of the present disclosure are the same with those of the above described method and will not be repeated here.

A computer program is provided according to the fourth aspect of the present disclosure. The computer program performs the steps of the method for hiding privacy information when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that both the foregoing general description and the following detailed description are exemplary and explanatory only and are not restrictive of the invention, as claimed.

### BRIEF DESCRIPTION OF THE DRAWINGS

In order to clearly explain the embodiments of the present disclosure, hereinafter, the introduction to the drawings required to be used in the depiction of the embodiments will be given simply. It is apparent that the following drawings only illustrate some of the embodiments of the present disclosure, and the person skilled in the art could obtain other drawings based on these drawings without paying creative labor.
Fig. 1 is a flow chart of a method for hiding privacy information according to an exemplary embodiment;
Fig. 2A is a flow chart of a method for hiding privacy information according to another exemplary embodiment;
Fig. 2B is a schematic diagram illustrating the implementation of the method for hiding privacy information as shown in the embodiment of Fig. 2A;
Fig. 2C is another schematic diagram illustrating the implementation of the method for hiding privacy information as shown in the embodiment of Fig. 2A;
Fig. 3 is an implementing schematic diagram illustrating the implementation of a method for hiding privacy information according to an exemplary embodiment;
Fig. 4 is a schematic diagram of a device for hiding privacy information according to an exemplary embodiment;
Fig. 5 is a schematic diagram of a device for hiding privacy information according to another exemplary embodiment; and
Fig. 6 is a structural diagram of a terminal according to an exemplary embodiment of the disclosure.

Specific embodiments in this disclosure have been shown by way of example in the foregoing drawings and are hereinafter described in detail. The figures and written description are not intended to limit the scope of the inventive concepts in any manner. Rather, they are provided to illustrate the inventive concepts to a person skilled in the art with reference to particular embodiments.

### DESCRIPTION OF THE EMBODIMENTS

In order to make the purposes, technical solutions and advantages of the present disclosure more apparent, the embodiments of the present disclosure will be further described in detail with reference to the accompanying drawings. Obviously, the described embodiments are only a part of embodiments of the present disclosure but not all of embodiments. Based on the embodiments in the present disclosure, all other embodiments obtained by those skilled in the art on the premise of making no creative labor belong to the protective scope of the present disclosure.

The terminals involved in the present disclosure may be cellphones, tablet computers, e-book readers, MP3 players ("Moving Picture Experts Group Audio Layer III"), MP4 ("Moving Picture Experts Group Audio Layer IV") players, portable laptop computers and desktop computers and so on.

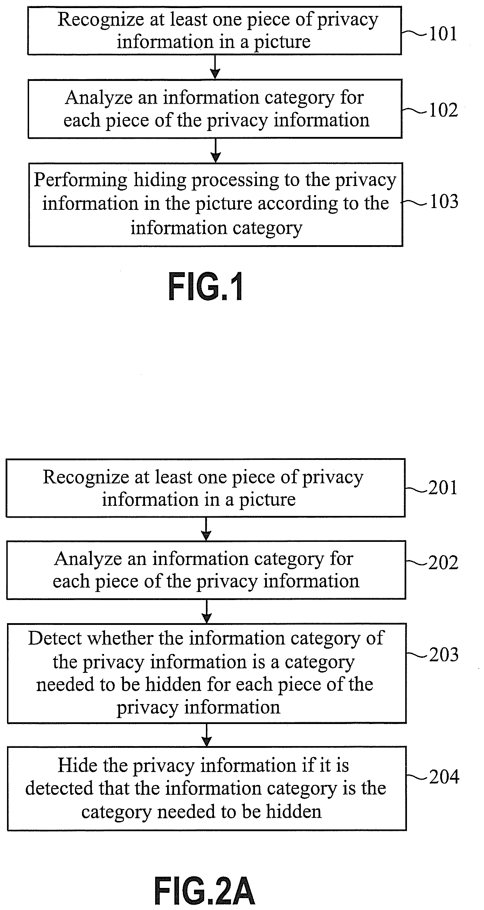

Fig. 1 is a flow chart of a method for hiding privacy information according to an exemplary embodiment. The present embodiment illustrates the method for hiding privacy information applied to a terminal. The method for hiding privacy information includes the following steps.

In step 101, at least one piece of privacy information in a picture is recognized.

The terminal recognizes the privacy information in the picture, and the privacy information includes but not limited to: text information and/or face information.

In step 102, an information category of each piece of the privacy information is analyzed.

The terminal analyzes the information category for each piece of the privacy information. The information category for text information includes, but not limited to: at least one of telephone numbers, bank account numbers, license plate numbers, cellphone numbers, account names, sensitive keywords, addresses, websites, postcodes, genders, names, nicknames, and unknown categories. The information category for face information includes, but not limited to: faces of at least one of current users, friend, celebrities, and unknowns.

In step 103, a hiding processing is performed to the privacy information in the picture according to the information category.

The terminal performs the hiding processing to the at least one piece of privacy information in the picture according to at least one corresponding information category. This hiding processing includes steps intended to determine whether or not to perform hiding processing to the privacy information.

To sum up, by recognizing at least one piece of the privacy information in a picture, analyzing an information category of each piece of the privacy information, and performing hiding processing to the privacy information in the picture according to the information category, the method for hiding privacy information provided by the present embodiment solves the problem that the related technology in the prior art cannot satisfactorily perform privacy information processing to a picture in which non all character information is privacy information that needs to be hidden; it achieves the effect of being able to adopt different processing ways, with respect to different information categories of the privacy information, to perform privacy information hiding processing.

Fig. 2A is a flow chart of a method for hiding privacy information according to another exemplary embodiment. The present embodiment illustrates the method for hiding privacy information applied to a terminal. The method for hiding privacy information includes the following steps.

In step 201, at least one piece of privacy information in a picture is recognized.

Generally, it is necessary to hide private information of pictures when users are sharing these pictures. The terminal may detect whether there is a picture to be shared. At least one piece of the privacy information in a picture is recognized at the time of sharing the picture. The privacy information in the picture includes, but not limited to: text information and/or face information.

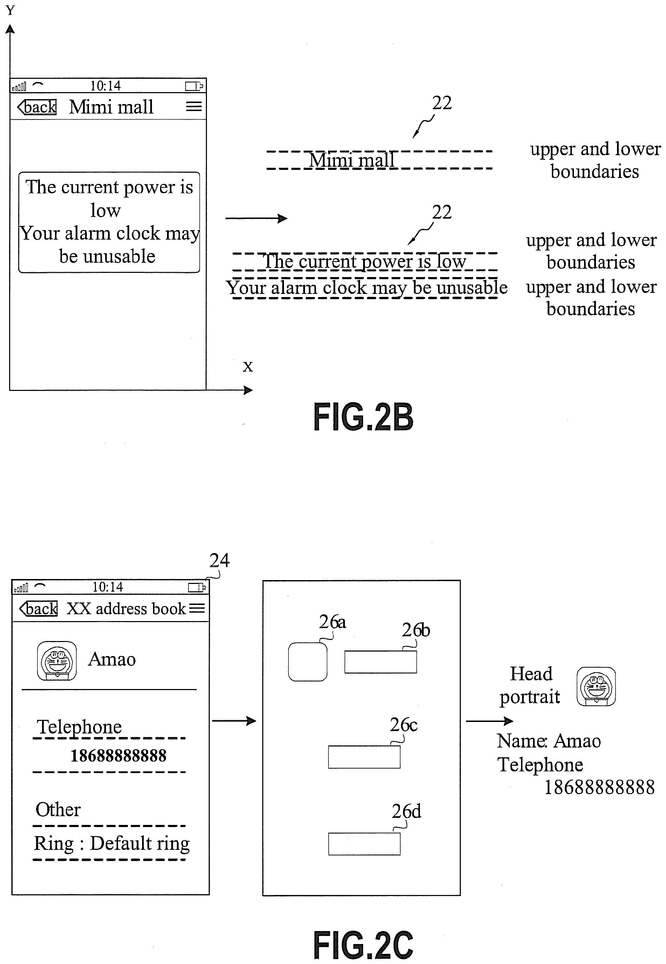

As for text information, the terminal recognizes text information in the picture according to the following sub-steps:
1. Preprocessing the picture
   The terminal performs gray processing to the picture to be shared, and then filters the grayed picture. The filtered grayed picture removes noise points.
2. Performing binarization processing to the grayed picture to obtain a binary picture
   The terminal also removes the noise in the binary picture after performing binarization processing to the grayed picture.
3. Locating and extracting text candidate regions from the binary picture
   Since almost all the pictures shared by the terminal are screenshots, characters in this type of pictures are relatively regular. For this reason, the terminal applies Y-axis projection to the binary picture directly according to the Y-axis in a coordinate system established by the pixels of the picture, searches text candidate regions 22 having characteristics of text information, and determines upper and lower boundaries for each of the text candidate regions 22 according to the projection result, as shown in Fig. 2B.
4. Executing character segmentation to the extracted text candidate regions
   The terminal may execute character segmentation to the text candidate regions according to a width rule, so as to obtain individual characters by using the segmentation.
5. Executing character recognition to the characters;
   The terminal executes character recognition to the segmented characters by using a preset character repertoire.
6. Outputting the recognition result
   Thus, the text information is recognized from the picture.

As for face information, the terminal recognizes faces from the picture by face recognition algorithm.

One recognition method is: if the picture is a screenshot, then the terminal may acquire application program information or display interface information corresponding to this screenshot, analyze a picture region, to which each piece of the privacy information in the picture belongs, according to the application program information or the display interface information, and recognize corresponding privacy information according to each picture region. In other words, since configurations of application programs and of display interfaces within the application programs are generally fixed, the terminal may pre-store templates respectively corresponding to the application programs and display interfaces. Such templates record region information (i.e. positions) of regions containing effective information (for example, head portrait, name, telephone number, ring...) on the application programs and display interfaces. The region information may be used to locate and recognize the privacy information.

Referring to the example as shown in Fig. 2C, if the picture is a screenshot 24, then the terminal acquires the display interface information corresponding to the screenshot 24: "user interface for the contacts of xx address book". The terminal looks up a template corresponding to the "use interface for the contacts of xx address book". The template records regions 26a-26d, where respective effective information (i.e. head portrait, name, telephone number, ring...) in the contacts interface is located, and information category (i.e. "face information", "text information": bank account number, license plate number, cellphone number, account name, sensitive keyword, address, etc.) of each region 26a-26d. Thus, the terminal extracts and recognizes corresponding privacy information 28 (i.e, head portrait, telephone and name) according to the regions 26a-26d from the picture 24.

In step 202, an information category of each piece of the privacy information is analyzed.

The terminal analyzes the information category for each piece of the privacy information after recognizing the privacy information in the picture. The information category of text information includes, but not limited to: at least one of telephone numbers, bank account numbers, license plate numbers, cellphone numbers, account names, sensitive keywords, addresses, websites, postcodes, genders, names, nicknames, and unknown categories. The information category of face information includes, but not limited to: at least one of the current user's face, friend's face, celebrity's face, and unknown faces.

If the privacy information is text information, then the terminal recognizes the information category of the privacy information according to preset regular expressions. Different regular expressions correspond to different information categories. For example:
the terminal may recognize an information category to be a telephone number such as 0510-4405222 or 021-87888822 when the regular expression is \d{3}-\d{8}|\d{4}-\d{7};
the terminal may recognize an information category to be an account name of numerical type with its value more than 10000 when the regular expression is [1-9][0-9]{4,};
the terminal may recognize an information category to be an E-mail address when the regular expression is \w+([-+.]\w+)*@\w+([-.]\w+)*\.\w+([-.]\w+)* <mailto:*@\w+([-.]\w+)*\.\w+([-.]\w+)*>;
the terminal may recognize an information category to be a web link when the regular expression is [a-zA-z]+://[^\s]*; and the like.

Alternatively, if the privacy information is text information, then the terminal recognizes the information category of the privacy information according to a semantic analysis of context.

For example, a preceding piece of text information is a short message "do you have a new telephone card, please give me the number"; and a current piece of text information is a short message "hi, buddy, my new number is 18688888888, please keep it". Thus the terminal may obtain, through a semantic analysis, that "hi, buddy, my new number is, please keep it" belongs to an unknown category, while "18688888888" belongs to a telephone number.

One analyzing method is: if the picture is a screenshot, then the terminal acquires application program information or display interface information corresponding to the screenshot, and analyzes the information category for each piece of the privacy information in the picture according to the application program information or the display interface information. In other words, because configurations of application programs and of display interfaces within the application programs are generally fixed, then the terminal may pre-store the templates corresponding to the respective application programs and display interfaces. The template records the region information of the regions where effective information corresponding to the respective application programs and display interfaces is located. These recorded regions may be used to locate and recognize the privacy information.

Still referring to the example as shown in Fig. 2C, if the picture is a screenshot 24, then the information category of an image obtained from the first region 26a by the terminal is "head portrait" according to region information of the first region 26a; the information category of a word obtained from the second region 26b is "name" according to region information of the second region 26b; the information category of a number obtained from the third region 26c is "telephone" according to region information of the third region 26c; the information category of another word obtained from the fourth region 26d is "ring" according to region information of the fourth region 26d.

If the privacy information is face information, then the terminal recognizes the information category of the face information according to a preset face information database. The preset face information database includes a face information database for at least one of current users, friends and celebrities. The terminal may determine, by face matching, the recognized face information is of which category among a current user's face, a friend's face, a celebrity's face, and an unknown face.

In step 203, whether the information category of the privacy information is a category needed to be hidden is detected for each piece of the privacy information.

The terminal detects whether the information category of the privacy information is a category needed to be hidden for each recognized piece of the privacy information. The terminal stores a first correspondence relationship between each kind of information category and a decision whether this category needs to be hidden or not. The terminal detects whether the information category of the privacy information is a category needed to be hidden by looking up the first correspondence relationship. The first corresponding relationship may be shown as follows:

| information category | needed to be hidden or not |
|---|---|
| telephone number | yes |
| bank account number | yes |
| nickname | no |
| celebrity's face | no |
| current user's face | no |
| ... | ... |

The first correspondence relationship is pre-stored by the terminal or is generated by the user's setting. Moreover, during usage, the terminal may receive a first setting signal triggered by the user to modify the first correspondence relationship. The first correspondence relationship may be modified according to the first setting signal. For example, the state of the information category "current user's face" in the first correspondence relationship is modified from "no" to "yes".

In step 204, the privacy information is hidden if it is detected that the information category is a category needed to be hidden.

The terminal hides the privacy information once detecting that the information category is a category needed to be hidden. This step may include the following sub-steps:
1. determining a hiding range and/or a hiding mode for the privacy information according to the information category;
The terminal stores a second correspondence relationship between each information category and a hiding range and/or a hiding mode. The hiding range includes: wholly hiding or partially hiding; the hiding mode includes: at least one of adding mosaics, color block covering and fuzzification processing. Each hiding mode may be further subdivided into many sub-modes according to different parameters, such as adding slight mosaics, adding moderate mosaics and adding heavy mosaics, for exaple. The terminal determines the hiding range and/or hiding mode corresponding to the information category by looking up the second correspondence relationship. The second correspondence relationship may be shown as follows:

| information category | hiding range | hiding mode |
|---|---|---|
| telephone number | rear 8 digits | color block covering with the same color as the background color |
| bank account number | all digits | fuzzification processing |
| license plate number | all digits | fuzzification processing |
| address | all words | adding heavy mosaics |
| unknown face | all face regions | adding slight mosaics |
| ... | ... | ... |

The second correspondence relationship is pre-stored by the terminal or is generated by the user's setting. Moreover, during usage, the terminal may receive a second setting signal triggered by the user to modify the second correspondence relationship. The second correspondence relationship may be modified according to the second setting signal.2. hiding the privacy information according to the hiding range and/or the hiding mode.

The terminal hides the privacy information according to the determined hiding range and/or hiding mode.

Of course, if it is detected that the information category is a category which does not need to be hidden, then the privacy information will not be processed.

Thus, the terminal may share the picture which has been hiding-processed.

To sum up, by recognizing at least one piece of the privacy information in a picture, analyzing an information category of each piece of the privacy information, and performing hiding processing to the privacy information in the picture according to the information category, the method for hiding privacy information provided by the present embodiment solves the problem that the related technology in the art cannot perform privacy information processing to the picture in which not all the character information is privacy information that needs to be hidden. This solution allows to adopt different processing ways (ex. ranges, modes) to perform privacy information hiding with respect to different information categories of the privacy information.

The method for hiding privacy information provided by the present embodiment may assure the picture quality of the picture which has been hiding-processed and allow personalized hiding according to the user's setting, by performing different ranges and modes of hidings to the privacy information according to the information category.

When the picture is a screenshot, by acquiring application program information or display interface information corresponding to this screenshot, extracting and recognizing the privacy information through the application program information or display interface information, and analyzing the information category of the privacy information, the method for hiding privacy information provided by the embodiment makes the best use of the characteristics of the screenshot on the terminal, and improves the accuracy of the extraction process, recognition process and analysis process.

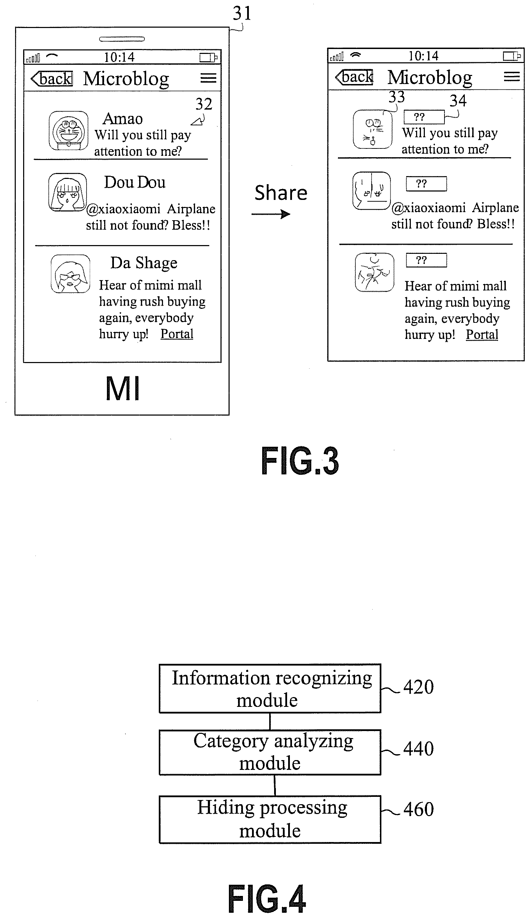

In one use environment as shown in Fig. 3, a user A captures a screenshot 32 to share when playing a micro blog application by using his cellphone 31. The cellphone 31 automatically detects the privacy information in the screenshot32 and analyzes the privacy information in the screenshot32. Then, fuzzification processing is performed to the head portraits 33 and nicknames 34 in the privacy information while other contents such as words and images are remained as they are. Finally, the cellphone 31 shares the picture which has been fuzzification-processed.

The following is a device embodiment of the present disclosure and may be used to perform the method embodiment of the present disclosure.

Fig. 4 is a structural schematic diagram of a device for hiding privacy information according to an exemplary embodiment of the present disclosure. The device for hiding privacy information may be implemented, for example, to be the whole or part of a terminal by software, hardware or a combination thereof. The device for hiding privacy information includes:
an information recognizing module 420 configured to recognize at least one piece of privacy information in a picture;
a category analyzing module 440 configured to analyze an information category for each piece of the privacy information; and
a hiding processing module 460 configured to perform hiding processing to the privacy information in the picture according to the information category.

To sum up, by recognizing at least one piece of the privacy information in a picture, analyzing an information category of each piece of the privacy information, and performing hiding processing to the privacy information in the picture according to the information category, the device for hiding privacy information provided by the present embodiment solves the problem that the related technology cannot satisfactorily perform privacy information processing to a picture in which not all the character information is privacy information that needs to be hidden; The solution achieves the effect of being able to adopt different processing ways to perform privacy information hiding with respect to different information categories of the privacy information.

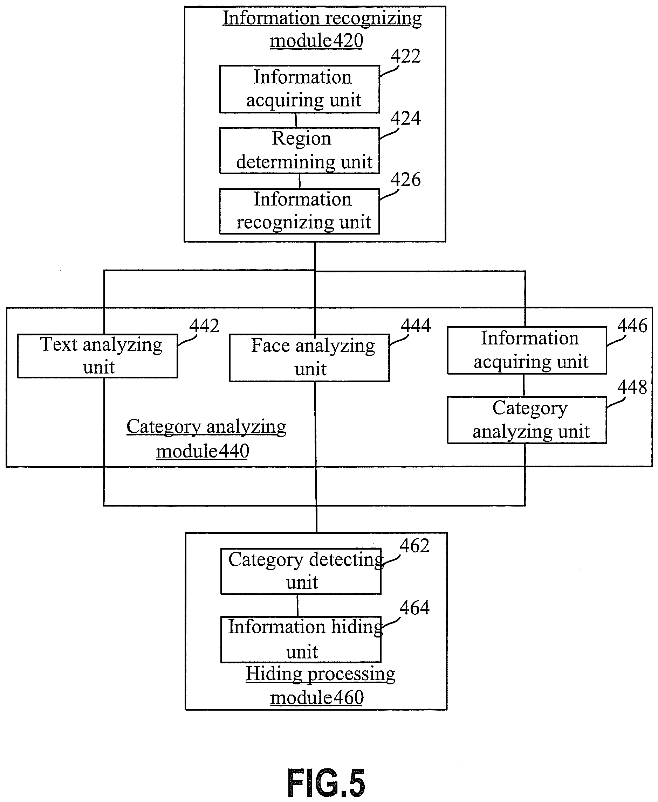

Fig. 5 is a structural schematic diagram of a device for hiding privacy information according to another exemplary embodiment of the present disclosure. The device for hiding privacy information may be realized to be the whole or part of a terminal by software, hardware or a combination thereof. The device for hiding privacy information includes:
an information recognizing module 420 configured to recognize at least one piece of privacy information in a picture;
a category analyzing module 440 configured to analyze an information category of each piece of the privacy information; and
a hiding processing module 460 configured to perform hiding processing to the privacy information in the picture according to the information category.

The category analyzing module 440 includes: a text analyzing unit 442 and/or a face analyzing unit 444;
the text analyzing unit 442 is configured to recognize, when the privacy information is text information, the information category of the privacy information according to a preset regular expression, different regular expressions corresponding to different information categories; or, recognize the information category of the privacy information according to a semantic analysis of context; and
the face analyzing unit 444 is configured to recognize, when the privacy information is face information, the information category of the face information according to a preset face information database.

The category analyzing module 440 further includes: an information acquiring unit 446 and a category analyzing unit 448;
the information acquiring unit 446 is configured to acquire, when the picture is a screenshot, application program information or display interface information corresponding to the screenshot; and
the category analyzing unit 448 is configured to analyze the information category for each piece of the privacy information in the picture according to the application program information or the display interface information.

The hiding processing module 460 includes: a category detecting unit 462 and an information hiding unit 464;
the category detecting unit 462 is configured to detect, for each piece of the privacy information, whether the information category of the privacy information is a category needed to be hidden; and
the information hiding unit 464 is configured to hide the privacy information when the category detecting unit detects that the information category is the category needed to be hidden.

The information hiding unit 464 includes: a hiding determining subunit and an information hiding subunit (not shown in the figure);
the hiding determining subunit is configured to determine a hiding range and/or a hiding mode for the privacy information according to the information category; and
the information hiding subunit is configured to hide the privacy information according to the hiding range and/or the hiding mode.

The information recognizing module 420 includes: an information acquiring unit 422, a region determining unit 424 and an information recognizing unit 426;
the information acquiring unit 422 is configured to acquire, when the picture is a screenshot, application program information or display interface information corresponding to the screenshot;
the region determining unit 424 is configured to analyze a picture region, to which each piece of the privacy information in the picture belongs, according to the application program information or the display interface information; and
the information recognizing unit 426 is configured to recognize corresponding privacy information according to the picture region.

To sum up, by recognizing at least one piece of the privacy information in a picture, analyzing an information category of each piece of the privacy information, and performing hiding processing to the privacy information in the picture according to the information category, the device for hiding privacy information provided by the present embodiment solves the problem that the related technology cannot satisfactorily perform privacy information processing to a picture in which not all the character information is privacy information that needs to be hidden, allowing to adopt different processing ways to perform privacy information hiding with respect to the information category of the privacy information.

The device for hiding privacy information provided by the present embodiment may assure the picture quality of the picture which has been hiding-processed and allow personalized hiding according to user's settings, by performing different ranges and modes of hiding to the privacy information according to different information categories.

When the picture is a screenshot, by acquiring application program information or display interface information corresponding to the screenshot, extracting, recognizing the privacy information through the application program information or display interface information, and analyzing the information category of the privacy information, the device for hiding privacy information provided by the embodiment makes the best use of the characteristics of the screenshot on the terminal, and improves the accuracy of the extraction process, recognition process and analysis process.

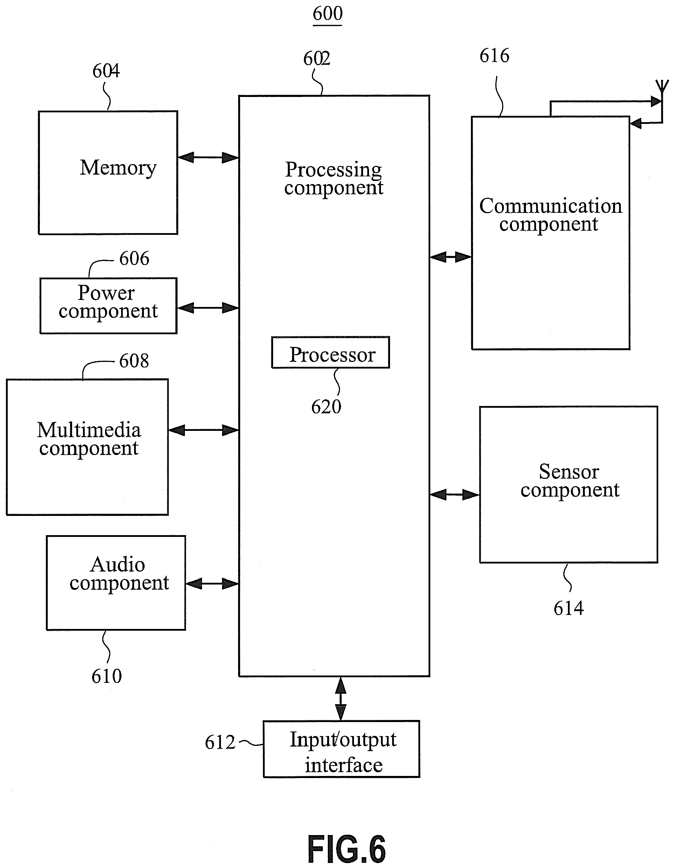

Fig. 6 is a structural diagram of a terminal according to an exemplary embodiment of the present disclosure. The terminal 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the terminal 600, such as the operations associated with display, telephone calls, data communications, camera operations, and recording operations. The processing component 602 may include one or more processors 620 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the terminal 600. Examples of such data include instructions for any applications or methods operated on the terminal 600, contact data, phonebook data, messages, pictures, videos, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the terminal 600. The power component 606 may include a power management system, one or more power sources, and any other components associated with the generation, management, and distribution of power in the terminal 600.

The multimedia component 608 includes a screen providing an output interface between the terminal 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slides, and gestures on the touch panel. The touch sensors may not only sense a boundary of a touch or slide action, but also sense a period of time and a pressure associated with the touch or slide action. In some embodiments, the multimedia component 608 includes a front camera and/or a rear camera. The front camera and/or the rear camera may receive an external multimedia datum while the terminal 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone (MIC) configured to receive an external audio signal when the terminal 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the terminal 600. For instance, the sensor component 614 may detect an open/closed status of the terminal 600, relative positioning of components, e.g., the display and the keypad, of the terminal 600, a change in position of the terminal 600 or a component of the terminal 600, a presence or absence of user contact with the terminal 600, an orientation or an acceleration/deceleration of the terminal 600, and a change in temperature of the terminal 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communication, wired or wirelessly, between the terminal 600 and other devices. The terminal 600 can access a wireless network based on a communication standard, such as WiFi, 2G, or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 600 may be implemented with one or more application specific integrated circuits (ASIC), digital signal processors (DSP), digital signal processing devices (DSPD), programmable logic devices (PLD), field programmable gate arrays (FPGA), controllers, micro-controllers, microprocessors, or other electronic components, for performing the above described methods.

In exemplary embodiments, there is also provided a non-transitory computer-readable storage medium including instructions, such as included in the memory 604, executable by the processor 620 in the terminal 600 for performing the above-described methods. For example, the non-transitory computer-readable storage medium may be a ROM, a random access memory (RAM), a CD-ROM, a magnetic tape, a floppy disc, an optical data storage device, and the like.

There is provided a non-transitory computer-readable storage medium having stored therein instructions that, when executed by a processor of a mobile terminal, causes the mobile terminal to perform a method for hiding privacy information as shown in Fig. 1 or Fig. 2.

Additionally, the method according to the present disclosure may be implemented as the computer program executed by CPU, and the computer program may be stored in the computer-readable storage medium. When the computer program is executed by the CPU, the above functions defined in the method of the present disclosure are performed.

Furthermore, the above steps in the method and the units in the system may also be realized by using the controller and the computer-readable storage medium which stores the computer program for causing the controller to achieve the above steps or unit functions.

Moreover, it should be understood that the computer-readable storage medium (such as the memory) described in the present disclosure may be a transitory or non-transitory memory, or a combination thereof. As an example and not restrictive, the non-transitory memory may include a read-only memory (ROM), a programmable ROM (PROM), an electrically programmable ROM (EPROM), an electrically erasable programmable ROM (EEPROM), or a flash memory. The transitory memory may include a random access memory (RAM) which can act as an external cache memory. As an example and not restrictive, RAM may be obtained in various forms, such as a synchronous RAM (DRAM), a dynamic RAM (DRAM), a synchronous DRAM (SDRAM), a double data rate SDRAM (DDR SDRAM), an enhanced SDRAM (ESDRAM), a synchronization link DRAM (SLDRAM), and a direct RambusRAM (DRRAM). The storage devices in the aspects of the present disclosure are intended to include, but not limited to, these and any other suitable types of memory.

The person skilled in the art should also understand that the various illustrative logical blocks, modules, circuits and algorithm steps described in combination with the contents disclosed herein may be implemented as an electronic hardware, computer software or a combination thereof. In order to clearly explain the interchangeability between the hardware and the software, a general description has been given in terms of the functions of various illustrative components, blocks, modules, circuits and steps. These functions are implemented as the software or implemented as the hardware depending on the particular applications and the design constraints imposed to the whole system. The person skilled in the art may realize these functions in various manners with respect to each kind of particular application, but this realization should not be interpreted as departing from the scope of the present disclosure.

The various illustrative logical blocks, modules and circuits described in combination with the contents disclosed herein may be realized or executed by the following components which are designed for executing the above functions: a general purpose processor, a digital signal processor (DSP), an application specific IC (ASIC), a field programmable gate array (FPGA), or other programmable logic devices, a discrete gate, or a transistor logic, a discrete hardware element or any combination thereof. The general purpose processor may be a microprocessor. Alternatively, the processor may be any conventional processor, controller, microcontroller or state machine. The processor may also be implemented as a combination of the computing devices, such as a combination of a DSP and a microprocessor, a plurality of microprocessors, one or more microprocessor combined with a DSP core, or any other such configurations.

The steps of the method or algorithm described in combination with the contents disclosed herein may be directly included in the hardware, in the software module executed by the processor, or in a combination thereof. The software module may reside in a RAM, a flash memory, a ROM, an EPROM, an EEPROM, a register, a hard disk, a removable disk, a CD-ROM, or any other storage mediums of any forms known in the art. The exemplary storage medium is coupled to the processor such that the processor can read information from the storage medium or write information into the storage medium. In an alternative solution, the storage medium may be integrated to the processor. The processor and the storage medium may reside in an ASIC. The ASIC may reside in a user terminal. In an alternative solution, the processor and the storage medium may reside in the user terminal as discrete components.

In one or more exemplary designs, the functions may be implemented in hardware, software, firmware, or any combination thereof. If the functions are implemented in software, the functions may be stored in the computer-readable storage medium or may be transmitted by the computer-readable medium as one or more instructions or codes. The computer-readable medium includes a computer storage medium and a communication medium, and the communication medium includes any medium assisting the transmission of the computer program from one place to another place. The storage medium may be any available medium which is able to be accessed by a general purpose or special purpose computer. As an example and not restrictive, the computer-readable medium may include a RAM, a ROM, an EEPROM, a CD-ROM or other optical disc storage devices, magnetic disc storage devices or other magnetic storage devices, or may be any other media which are used to carry or store the desired program codes in the form of instructions or data structures and can be accessed by a general purpose or special purpose computer or a general purpose or special purpose processor. Also, any linking may be properly referred to as the computer-readable medium. For example, if sending the software from a website, a server, or other remote sources by a coaxial cable, a fiber optic cable, a twisted pair, a digital subscriber line (DSL), or a wireless technology such as an infrared, a radio and a microwave technologies, the above coaxial cable, fiber optic cable, twisted pair, DSL, or wireless technology such as the infrared, the radio and the microwave technologies are included in the definition of the media. As used herein, the magnetic disc and the optical disc include a compact disc (CD), a laser disc, an optical disc, a digital versatile disc (DVD), a floppy disc and a blue-ray disc, wherein the magnetic disc usually reproduces data magnetically, while the optical disc reproduces data optically with lasers. The combinations of the above contents should also be included within the scope of the computer-readable medium.

Although the exemplary embodiments of the present disclosure are illustrated in the above contents, it should be noted that various changes and modifications may be made to the disclosed exemplary embodiments without departing from the scope of the present disclosure as defined in the claims. The functions, steps and/or actions in the method claims according to the disclosed embodiments described herein need not be performed in any specific order. In addition, although the elements of the present disclosure may be described or claimed in the individual form, they can also be conceived to be more unless they are explicitly restricted to be singular.

The sequence numbers of embodiments of the present disclosure are just meant for illustration, which do not represent the superiority and inferiority of the embodiments.

The person skilled in the art can understand that the whole or part of the steps for achieving the above-described embodiments can be accomplished by hardware, or be accomplished by a program instructing relevant hardware, the program may be stored in a computer readable storage medium, and the above-mentioned storage medium may be a read-only memory, a magnetic disc or an optical disc, etc.

## Claims

1. A method for hiding privacy information, comprising the steps of:
(a) acquiring the picture of a screenshot and acquiring application program information or display interface information corresponding to the screenshot;
recognizing (101, 201) at least one piece of privacy information in a picture, the privacy information consisting of text information and/or face information;
analyzing each piece of the privacy information in the picture according to the application program information or the display interface to obtain an information category of the privacy information relating to text information and/ or face information; and
performing (103) hiding processing to the privacy information in the picture according to the information category

2. The method according to claim 1, **characterized in that** the step of analyzing the information category for each piece of the privacy information comprises:
recognizing, if the privacy information is text information, the information category of the privacy information according to a preset regular expression, different regular expressions corresponding to different information categories; or, recognizing the information category of the privacy information according to a semantic analysis of context; and
recognizing, if the privacy information is face information, the information category of the face information according to a preset face information database.

3. The method according to any one of claims 1 to 2, **characterized in that** the step of performing hiding processing to the privacy information in the picture according to the information category comprises:
detecting (203) whether the information category of the privacy information is a category needed to be hidden for each piece of the privacy information; and
hiding (204) the privacy information if it is detected that the information category is the category needed to be hidden.

4. The method according to claim 3, **characterized in that** the step of hiding the privacy information comprises:
determining a hiding range and/or a hiding mode of the privacy information according to the information category; and
hiding the privacy information according to the hiding range and/or the hiding mode.

5. The method according to any one of claims 1 to 4, **characterized in that** the step of recognizing at least one piece of privacy information in a picture comprises:
acquiring, if the picture is a screenshot (24), application program information or display interface information corresponding to the screenshot (24);
analyzing a picture region (26a, 26b, 26c, 26d), to which each piece of the privacy information in the picture belongs, according to the application program information or the display interface information; and
recognizing corresponding privacy information according to the picture region (26a, 26b, 26c, 26d).

6. A device for hiding privacy information, comprising:
an information acquiring unit (422) configured to acquire the picture of a screenshot and application program information or display information corresponding to the screenshot;
an information recognizing module (420) configured to recognize at least one piece of privacy information in a picture, the privacy information consisting of text information and/or face information;
a category analyzing module (440) configured to analyze an information category for each piece of the privacy information, the category analyzing module (440) comprising an information acquiring unit (446) and a category analyzing unit, (448) wherein
the category analyzing unit is configured to analyze each piece of the privacy information in the picture according to the application program information or the display interface information to obtain an information category of the privacy information relating to text information and/or face information ; and
a hiding processing module (460) configured to perform hiding processing to the privacy information in the picture according to the information category.

7. The device according to claim 6, **characterized in that** the category analyzing module (440) comprises:
a text analyzing unit (442) and a face analyzing unit (444);
the text analyzing unit (442) is configured to recognize, when the privacy information is text information, the information category of the privacy information according to a preset regular expression, different regular expressions corresponding to different information categories; or, recognize the information category of the privacy information according to a semantic analysis of context; and
the face analyzing unit (444) is configured to recognize, when the privacy information is face information, the information category of the face information according to a preset face information database.

8. The device according to any one of claims 6 to 7, **characterized in that** the hiding processing module (460) comprises: a category detecting unit (462) and an information hiding unit (464);
the category detecting unit (462) is configured to detect, for each piece of the privacy information, whether the information category of the privacy information is a category needed to be hidden; and
the information hiding unit (464) is configured to hide the privacy information when the category detecting unit detects that the information category is the category needed to be hidden.

9. The device according to claim 8, **characterized in that** the information hiding unit (464) comprises:
a hiding determining subunit and an information hiding subunit;
the hiding determining subunit is configured to determine a hiding range and/or a hiding mode of the privacy information according to the information category; and
the information hiding subunit is configured to hide the privacy information according to the hiding range and/or the hiding mode.

10. The device according to any one of claims 6 to 9, **characterized in that** the information recognizing module (420) comprises: an information acquiring unit (422), a region determining unit (424) and an information recognizing unit (426);
the information acquiring unit (422) is configured to acquire, when the picture is a screenshot, application program information or display interface information corresponding to the screenshot;
the region determining unit (424) is configured to analyze a picture region, to which each piece of the privacy information in the picture belongs, according to the application program information or the display interface information; and
the information recognizing unit (426) is configured to recognize corresponding privacy information according to the picture region.

11. A computer program including instructions for executing the steps of a method for hiding privacy information according to any one of claims 1 to 5 when said program is executed by a computer.

12. A recording medium readable by a computer and having recorded thereon a computer program including instructions for executing the steps of a method for hiding privacy information according to claims 1 to 5.

## Patentansprüche

1. Verfahren zum Ausblenden von Privatsphäreninformationen, umfassend folgende Schritte:
(a) Erfassen des Bilds eines Screenshots und Erfassen von Anwendungsprogramminformationen oder Anzeigeschnittstelleninformationen entsprechend dem Screenshot,
Erkennen (101, 201) mindestens einer einzelnen Privatsphäreninformation in einem Bild, wobei die Privatsphäreninformation aus Textinformationen und/oder Gesichtsinformationen besteht,
Analysieren jeder einzelnen Privatsphäreninformation in dem Bild gemäß den Anwendungsprogramminformationen oder der Anzeigeschnittstelle, um eine Informationskategorie der Privatsphäreninformation zu erhalten, die mit Textinformationen und/oder Gesichtsinformationen verknüpft ist, und
Durchführen (103) einer Ausblendbearbeitung bezüglich der Privatsphäreninformationen in dem Bild gemäß der Informationskategorie.

2. Verfahren nach Anspruch 1, **dadurch gekennzeichnet, dass** der Schritt des Analysierens der Informationskategorie für jede einzelne Privatsphäreninformation umfasst:
Erkennen, wenn die Privatsphäreninformationen Textinformationen sind, der Informationskategorie der Privatsphäreninformationen gemäß einem vorab festgelegten regelmäßigen Ausdruck, verschiedenen regelmäßigen Ausdrücken entsprechend verschiedenen Informationskategorien, oder Erkennen der Informationskategorie der Privatsphäreninformationen gemäß einer Semantikanalyse des Kontexts, und
Erkennen, wenn die Privatsphäreninformationen Gesichtsinformationen sind, der Informationskategorie der Gesichtsinformationen gemäß einer vorab festgelegten Gesichtsinformationsdatenbank.

3. Verfahren nach einem der Ansprüche 1 bis 2, **dadurch gekennzeichnet, dass** der Schritt des Durchführens einer Ausblendbearbeitung bezüglich der Privatsphäreninformationen in dem Bild gemäß der Informationskategorie umfasst:
Feststellen (203), ob die Informationskategorie der Privatsphäreninformation eine Kategorie ist, die für jede einzelne Privatsphäreninformation ausgeblendet werden muss, und
Ausblenden (204) der Privatsphäreninformationen, wenn festgestellt wird, dass die Informationskategorie die Kategorie ist, die ausgeblendet werden muss.

4. Verfahren nach Anspruch 3, **dadurch gekennzeichnet, dass** der Schritt des Ausblendens der Privatsphäreninformationen umfasst:
Bestimmen eines Ausblendbereichs und/oder eines Ausblendmodus der Privatsphäreninformationen gemäß der Informationskategorie, und
Ausblenden der Privatsphäreninformationen gemäß dem Ausblendbereich und/oder dem Ausblendmodus.

5. Verfahren nach einem der Ansprüche 1 bis 4, **dadurch gekennzeichnet, dass** der Schritt des Erkennens mindestens einer einzelnen Privatsphäreninformation in einem Bild umfasst:
Erfassen, wenn das Bild ein Screenshot (24) ist, von Anwendungsprogramminformationen oder Anzeigeschnittstelleninformationen entsprechend dem Screenshot (24),
Analysieren eines Bildbereichs (26a, 26b, 26c, 26d), zu welchem jede einzelne Privatsphäreninformation in dem Bild gehört, gemäß den Anwendungsprogramminformationen oder den Anzeigeschnittstelleninformationen, und
Erkennen von entsprechenden Privatsphäreninformationen gemäß dem Bildbereich (26a, 26b, 26c, 26d).

6. Vorrichtung zum Ausblenden von Privatsphäreninformationen, umfassend:
eine Informationserfassungseinheit (422), die konfiguriert ist, um das Bild von einem Screenshot und Anwendungsprogramminformationen oder Anzeigeinformationen entsprechend dem Screenshot zu erfassen,
ein Informationserkennungsmodul (420), das konfiguriert ist, um mindestens eine einzelne Privatsphäreninformation in einem Bild zu erkennen, wobei die Privatsphäreninformation aus Textinformationen und/oder Gesichtsinformationen besteht,
ein Kategorieanalysemodul (440), das konfiguriert ist, um eine Informationskategorie für jede einzelne Privatsphäreninformation zu analysieren, wobei das Kategorieanalysemodul (440) eine Informationserfassungseinheit (446) und eine Kategorieanalyseeinheit (448) umfasst, wobei
die Kategorieanalyseeinheit konfiguriert ist, um jede einzelne Privatsphäreninformation in dem Bild gemäß den Anwendungsprogramminformationen oder den Anzeigeschnittstelleninformationen zu analysieren, um eine Informationskategorie der Privatsphäreninformationen bezüglich Textinformationen und/oder Gesichtsinformationen zu erhalten, und
ein Ausblendbearbeitungsmodul (460), das konfiguriert ist, um eine Ausblendbearbeitung bezüglich der Privatsphäreninformationen in dem Bild gemäß der Informationskategorie durchzuführen.

7. Vorrichtung nach Anspruch 6, **dadurch gekennzeichnet, dass** das Kategorieanalysemodul (440) umfasst:
eine Textanalyseeinheit (442) und eine Gesichtsanalyseeinheit (444),
wobei die Textanalyseeinheit (442) konfiguriert ist, um, wenn die Privatsphäreninformationen Textinformationen sind, die Informationskategorie der Privatsphäreninformationen gemäß einem vorab festgelegten regelmäßigen Ausdruck, verschiedenen regelmäßigen Ausdrücken entsprechend verschiedenen Informationskategorien zu erkennen, oder die Informationskategorie der Privatsphäreninformationen gemäß einer Semantikanalyse des Kontexts zu erkennen, und
die Gesichtsanalyseeinheit (444) konfiguriert ist, um, wenn die Privatsphäreninformationen Gesichtsinformationen sind, die Informationskategorie der Gesichtsinformationen gemäß einer vorab festgelegten Gesichtsinformationsdatenbank zu erkennen.

8. Vorrichtung nach einem der Ansprüche 6 bis 7, **dadurch gekennzeichnet, dass** das Ausblendbearbeitungsmodul (460) umfasst: eine Kategoriefeststelleinheit (462) und eine Informationsausblendeinheit (464),
die Kategoriefeststelleinheit (462) konfiguriert ist, um für jede einzelne Privatsphäreninformation festzustellen, ob die Informationskategorie der Privatsphäreninformation eine Kategorie ist, die ausgeblendet werden muss, und
die Informationsausblendeinheit (464) konfiguriert ist, um die Privatsphäreninformationen auszublenden, wenn die Kategoriefeststelleinheit feststellt, dass die Informationskategorie die Kategorie ist, die ausgeblendet werden muss.

9. Vorrichtung nach Anspruch 8, **dadurch gekennzeichnet, dass** die Informationsausblendeinheit (464) umfasst:
eine Ausblendbestimmungsuntereinheit und eine Informationsausblenduntereinheit,
wobei die Ausblendbestimmungsuntereinheit konfiguriert ist, um einen Ausblendbereich und/oder einen Ausblendmodus der Privatsphäreninformationen gemäß der Informationskategorie zu bestimmen, und
die Informationsausblenduntereinheit konfiguriert ist, um die Privatsphäreninformationen gemäß dem Ausblendbereich und/oder dem Ausblendmodus auszublenden.

10. Vorrichtung nach einem der Ansprüche 6 bis 9, **dadurch gekennzeichnet, dass** das Informationserkennungsmodul (420) umfasst: eine Informationserfassungseinheit (422), eine Bereichsbestimmungseinheit (424) und eine Informationserkennungseinheit (426),
wobei die Informationserfassungseinheit (422) konfiguriert ist, um, wenn das Bild ein Screenshot ist, Anwendungsprogramminformationen oder Anzeigeschnittstelleninformationen entsprechend dem Screenshot zu erfassen,
die Bereichsbestimmungseinheit (424) konfiguriert ist, um einen Bildbereich, zu welchem jede einzelne Privatsphäreninformation in dem Bild gehört, gemäß den Anwendungsprogramminformationen oder den Anzeigeschnittstelleninformationen zu analysieren, und
die Informationserkennungseinheit (426) konfiguriert ist, um entsprechende Privatsphäreninformationen gemäß dem Bildbereich zu erkennen.

11. Computerprogramm, das Anweisungen zum Ausführen der Schritte eines Verfahrens zum Ausblenden von Privatsphäreninformationen nach einem der Ansprüche 1 bis 5, wenn das Programm von einem Computer ausgeführt wird, beinhaltet.

12. Aufzeichnungsmedium, das von einem Computer gelesen werden kann und in dem ein Computerprogramm gespeichert ist, das Anweisungen zum Ausführen der Schritte eines Verfahrens zum Ausblenden von Privatsphäreninformationen nach den Ansprüchen 1 bis 5 beinhaltet.

## Revendications

1. Procédé pour masquer des informations de confidentialité, comprenant les étapes consistant à :
(a) acquérir l'image d'une capture d'écran et acquérir des informations de programme d'application ou des informations d'interface d'affichage correspondant à la capture d'écran ;
reconnaître (101, 201) au moins un élément d'informations de confidentialité dans une image, les informations de confidentialité se composant d'informations de texte et/ou d'informations de visage ;
analyser chaque élément des informations de confidentialité dans l'image selon les informations de programme d'application ou l'interface d'affichage pour obtenir une catégorie d'informations des informations de confidentialité relatives à des informations de texte et/ou des informations de visage ; et
effectuer (103) un traitement de masquage sur les informations de confidentialité dans l'image selon la catégorie d'informations.

2. Procédé selon la revendication 1, **caractérisé en ce que** l'étape d'analyse de la catégorie d'informations pour chaque élément des informations de confidentialité comprend :
la reconnaissance, si les informations de confidentialité sont des informations de texte, de la catégorie d'informations des informations de confidentialité selon une expression régulière prédéfinie, différentes expressions régulières correspondant à différentes catégories d'informations ; ou, la reconnaissance de la catégorie d'informations des informations de confidentialité selon une analyse sémantique de contexte ; et
la reconnaissance, si les informations de confidentialité sont des informations de visage, de la catégorie d'informations des informations de visage selon une base de données d'informations de visage prédéfinie.

3. Procédé selon l'une quelconque des revendications 1 à 2, **caractérisé en ce que** l'étape d'exécution d'un traitement de masquage sur les informations de confidentialité dans l'image selon la catégorie d'informations comprend :
la détection (203) de si la catégorie d'informations des informations de confidentialité est une catégorie devant être masquée pour chaque élément des informations de confidentialité ; et
le masquage (204) des informations de confidentialité s'il est détecté que la catégorie d'informations est la catégorie devant être masquée.

4. Procédé selon la revendication 3, **caractérisé en ce que** l'étape de masquage des informations de confidentialité comprend :
la détermination d'une plage de masquage et/ou d'un mode de masquage des informations de confidentialité selon la catégorie d'informations ; et
le masquage des informations de confidentialité selon la zone de masquage et/ou le mode de masquage.

5. Procédé selon l'une quelconque des revendications 1 à 4, **caractérisé en ce que** l'étape de reconnaissance d'au moins un élément d'informations de confidentialité dans une image comprend :
l'acquisition, si l'image est une capture d'écran (24), d'informations de programme d'application ou d'informations d'interface d'affichage correspondant à la capture d'écran (24) ;
l'analyse d'une région d'image (26a, 26b, 26c, 26d), à laquelle appartient chaque élément des informations de confidentialité dans l'image, selon les informations de programme d'application ou les informations d'interface d'affichage ; et
la reconnaissance d'informations de confidentialité correspondantes selon la région d'image (26a, 26b, 26c, 26d).

6. Dispositif pour masquer des informations de confidentialité, comprenant :
une unité d'acquisition d'informations (422) configurée pour acquérir l'image d'une capture d'écran et des informations de programme d'application ou des informations d'affichage correspondant à la capture d'écran ;
un module de reconnaissance d'informations (420) configuré pour reconnaître au moins un élément d'informations de confidentialité dans une image, les informations de confidentialité se composant d'informations de texte et/ou d'informations de visage ;
un module d'analyse de catégorie (440) configuré pour analyser une catégorie d'informations pour chaque élément des informations de confidentialité, le module d'analyse de catégorie (440) comprenant une unité d'acquisition d'informations (446) et une unité d'analyse de catégorie (448),
dans lequel l'unité d'analyse de catégorie est configurée pour analyser chaque élément des informations de confidentialité dans l'image selon les informations de programme d'application ou les informations d''interface d'affichage pour obtenir une catégorie d'informations des informations de confidentialité relatives à des informations de texte et/ou des informations de visage ; et
un module de traitement de masquage (460) configuré pour effectuer un traitement de masquage sur les informations de confidentialité dans l'image selon la catégorie d'informations.

7. Dispositif selon la revendication 6, **caractérisé en ce que** le module d'analyse de catégorie (440) comprend :
une unité d'analyse de texte (442) et une unité d'analyse de visage (444) ;
l'unité d'analyse de texte (442) est configurée pour reconnaître, lorsque les informations de confidentialité sont des informations de texte, la catégorie d'informations des informations de confidentialité selon une expression régulière prédéfinie, différentes expressions régulières correspondant à différentes catégories d'informations ; ou, reconnaître la catégorie d'informations des informations de confidentialité selon une analyse sémantique de contexte ; et
l'unité d'analyse de visage (444) est configurée pour reconnaître, lorsque les informations de confidentialité sont des informations de visage, la catégorie d'informations des informations de visage selon une base de données d'informations de visage prédéfinie.

8. Dispositif selon l'une quelconque des revendications 6 à 7, **caractérisé en ce que** le module de traitement de masquage (460) comprend : une unité de détection de catégorie (462) et une unité de masquage d'informations (464) ;
l'unité de détection de catégorie (462) est configurée pour détecter, pour chaque élément des informations de confidentialité, si la catégorie d'informations des informations de confidentialité est une catégorie devant être masquée ; et
l'unité de masquage d'informations (464) est configurée pour masquer les informations de confidentialité lorsque l'unité de détection de catégorie détecte que la catégorie d'informations est la catégorie devant être masquée.

9. Dispositif selon la revendication 8, **caractérisé en ce que** l'unité de masquage d'informations (464) comprend :
une sous-unité de détermination de masquage et une sous-unité de masquage d'informations ;
la sous-unité de détermination de masquage est configurée pour déterminer une plage de masquage et/ou un mode de masquage des informations de confidentialité selon la catégorie d'informations ; et
la sous-unité de masquage d'informations est configurée pour masquer les informations de confidentialité selon la zone de masquage et/ou le mode de masquage.

10. Dispositif selon l'une quelconque des revendications 6 à 9, **caractérisé en ce que** le module de reconnaissance d'informations (420) comprend : une unité d'acquisition d'informations (422), une unité de détermination de région (424) et une unité de reconnaissance d'informations (426) ;
l'unité d'acquisition d'informations (422) est configurée pour acquérir, lorsque l'image est une capture d'écran, des informations de programme d'application ou des informations d'interface d'affichage correspondant à la capture d'écran ;
l'unité de détermination de région (424) est configurée pour analyser une région d'image, à laquelle appartient chaque élément des informations de confidentialité dans l'image, selon les informations de programme d'application ou les informations d'interface d'affichage ; et
l'unité de reconnaissance d'informations (426) est configurée pour reconnaître des informations de confidentialité correspondantes selon la région d'image.

11. Programme informatique incluant des instructions pour exécuter les étapes d'un procédé pour masquer des informations de confidentialité selon l'une quelconque des revendications 1 à 5 lorsque ledit programme est exécuté par un ordinateur.

12. Support d'enregistrement lisible par un ordinateur et sur lequel est enregistré un programme informatique incluant des instructions pour exécuter les étapes d'un procédé pour masquer des informations de confidentialité selon les revendications 1 à 5.
